# EUROPÄISCHE PATENTSCHRIFT

(11) **EP 0 511 568 B1**
(45) Veröffentlichungstag und Bekanntmachung des Hinweises auf die Patenterteilung: **02.08.1995**
(21) Anmeldenummer: 92106765.8
(22) Anmeldetag: 21.04.1992
(51) Int. Cl.: C08G 77/62, C04B 35/58, C08K 5/19

(54) **Organische Silazanpolymere, Verfahren zu ihrer Herstellung, sowie ein Verfahren zur Herstellung von Keramikmaterialien**
Polyorganosilazanes, process for their preparation and a process for making ceramic material
Polyorganosilazanes, procédé pour leur préparation et procédé de fabrication de matières céramiques

(30) Priorität: 01.05.1991 DE 4114217
(43) Veröffentlichungstag der Anmeldung: 04.11.1992
(73) Patentinhaber: BAYER AG, 51368 Leverkusen (DE)
(72) Erfinder: Huggins, John, Dr., W-5090 Leverkusen 1 (DE)

(56) Entgegenhaltungen:
- EP-A- 0 202 176
- EP-A- 0 364 339
- EP-A- 0 368 536
- DE-A- 3 639 511
- DE-A- 3 736 914

## Beschreibung

Diese Erfindung betrifft neue organische Silazanpolymere, ein Verfahren zu ihrer Herstellung sowie ein Verfahren zur Herstellung von Keramikmaterialien aus diesen Silazanpolymeren.

In jüngster Zeit besteht ein großes Interesse an Verfahren zur Herstellung von Siliziumnitrid/Siliziumcarbid-haltigen keramischen Materialien. Siliziumnitrid und Siliziumcarbid verfügen über eine Reihe wünschenswerter Eigenschaften, wie chemische Inertheit, extreme Härte und Stabilität bei sehr hohen Temperaturen.

Die Pyrolyse von organischen Silazanpolymeren zu Siliziumnitrid/Siliziumcarbid-haltigen keramischen Materialien wurde bereits in der Literatur (K.J. Wynne und R.W. Rice Ann. Rev. Mater. Sci. Vol. 14 (1984) 297-334; D. Seyferth in "Transformation of Organometallics into Common and Exotic Materials: Design and Activation" R.M. Laine, Ed., Martinus Nijhoff Publ., 1988, S. 133-154) mehrfach beschrieben,

Polymervorstufen für Siliziumnitrid/Siliziumcarbidhaltige keramische Materialien finden, u.a., Anwendungen in der Herstellung von Keramikbeschichtungen und -fasern sowie als Binder oder Matrixmaterialien für die Herstellung von Formteilen aus Keramik- bzw. Metallpulver oder Keramikfasern.

Zur Herstellung von Organosilazanen werden in der Regel Organochlorsilane als Ausgangsmaterialien eingesetzt und mit Ammoniak, primären oder sekundären Aminen umgesetzt. Diese Ammonolyseprodukte sind als Vorstufen zu Keramikmaterialien nur bedingt geeignet, da sie nur geringe Keramikausbeuten bei der Pyrolyse im Bereich von 800° bis 2000°C aufweisen. Daher ist eine Reihe von Vorschlägen für Verfahren zur Herstellung von organischen Silazanpolymeren gemacht worden, die durch höhere Keramikausbeuten bei der Pyrolyse gekennzeichnet sind, wie insbesondere anhand der nachfolgend beschriebenen Literaturstellen ersichtlich wird.

Aus der DE-A 2 218 960 ist ein Verfahren zur Herstellung von SiC/Si₃N₄-Keramikmaterialien bekannt, welches darin besteht, Chlorsilane mit Aminen oder Ammoniak umzusetzen und anschließend auf hohe Temperaturen zu erhitzen. Dabei bilden sich Carbosilazan-Harze. Für die Bildung des Carbosilazan-Harzes sind allerdings hohe Temperaturen von 520° bis 650°C erforderlich, was dieses Verfahren für die technische Herstellung von Silazanpolymeren wenig attraktiv macht. Weiterhin besitzen die Carbosilazan-Harze den Nachteil, daß die Ausbeute der daraus gebildeten Keramikmaterialien lediglich ca. 55 Gew.-% beträgt. In den Ausführungsbeispielen dieser Patentliteratur werden als Chlorsilane lediglich Methyltrichlorsilan bzw. Dimethyldichlorsilan und als Amin nur Methylamin eingesetzt.

In der US-A 4 482 669 wird ein Verfahren zur Herstellung von organischen Silazanpolymeren beschrieben, worin Ammoniak mit Organochlorsilanen der allgemeinen Formel (1) 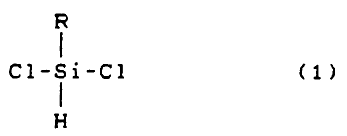
unter Bildung eines Ammonolyseprodukts umgesetzt wird. Dieses Ammonolyseprodukt wird anschließend mit basischen Katalysatoren zur Bildung von Silazanpolymeren polymerisiert.

Als Katalysatoren werden Alkali- und Erdalkalimetallhydride, wie z.B. KH und NaH, Alkali- und Erdalkali-Metallkomplexhydride, wie z.B. KB(sec-C₄H₉)₃H, LiB(C₂H₅)₃H und LiAl(OC₄H₉)₃H, Alkali- und Erdalkalimetall-Hydroxide, -Alkoxide, -Amide sowie -Silylamide, wie z.B. Lithium-, Natrium- oder Kaliumalkoxide oder [(CH₃)₃Si]₂NM (M = Alkalimetall oder ein halbes Äquivalent Erdalkalimetall) bzw. Alkalimetalle allein oder kombiniert mit polycyclischen aromatischen Kohlenwasserstoffen beschrieben. Wie aus den Beispielen dieses Patents hervorgeht, werden als Katalysatoren Kaliumhydrid, Natriumamid und Kaliumtri(sec-butyl)borhydrid bevorzugt eingesetzt. Der Katalysator wird anschließend mit Methyliodid neutralisiert und das ausgefallene Alkalimetalliodid abgetrennt. Die bei diesem Verfahren erhaltenen Silazanpolymere geben bei der Pyrolyse bis 1000°C Keramikmaterialien in hoher Ausbeute.

Mehrere andere Verfahren zur Herstellung von organischen Silazanpolymeren durch die basenkatalysierte Polymerisation der Ammonolyseprodukte von Organochlorsilanen sind in US-A 4 720 532, DE-A 37 19 343, DE-A 37 36 914, EP-A 0 296 433 und EP-A 0 296 434 beschrieben worden. Diese Verfahren unterscheiden sich nur in der Auswahl der Organochlorsilane, die bei der Ammonolyse eingesetzt werden, jedoch wird in allen Fällen ein Mindestanteil an Chlorsilanen der allgemeinen Formel (1) eingesetzt.

Bei allen diesen Verfahren werden bei der Polymerisation Alkalimetall-haltige basischen Katalysatoren, vorzugsweise Kaliumhydrid, eingesetzt. Der Katalysator wird nach der Polymerisation mit einem halogenhaltigen Elektrophil, wie Methyliodid oder einem Organochlorsilan, neutralisiert und das ausgefallene Kaiumhalogenid abgetrennt.

Die zuletzt beschriebenen Verfahren haben jedoch mehrere Nachteile:
Die bevorzugten Katalysatoren Kaliumhydrid, Natriumamid sowie Kaliumtri(sec-butyl)borhydrid sind leichtentzündliche Feststoffe oder bilden leichtentzündliche bzw. selbstentzündliche Lösungen, die in Gegenwart von Luftfeuchtigkeit endzündbare Gase entwickeln. Der Umgang mit größeren Mengen dieser Substanzen ist daher mit einer Brand- und Explosionsgefahr verbunden. Daher müssten bei einer technischen Ausführung dieses Verfahrens aufwendige Maßnahmen zur Vermeidung dieser Gefahren angewandt werden.

Darüber hinaus haben alle bisher beschriebenen basischen Katalysatoren als Gegenion Alkalimetall oder Erdalkalimetall-Kationen. Zur Entfernung der Kationen wird mit halogenhaltigen Elektrophilen neutralisiert und die ausfallenden Alkalihalogenid- bzw. Erdalkalihalogenid-Salze werden durch Filtration abgetrennt. Diese Neutralisations- und Filtrations-Schritte sind nicht nur aufwendig sondern auch nur wenig wirksam. In allen Fällen bleiben Reste der Akalihalogenid- bzw. Erdalkalihalogenid-Salze als Verunreinigung im Produkt. Solche Verunreinigungen sind unerwünscht und können die Eigenschaften eines aus solchen Polymeren hergestellten Keramikmaterials negativ beeinflussen.

Aufgabe dieser Erfindung ist die Bereitstellung von Silazanpolymeren, die durch ausgezeichnete Eigenschaften für die Herstellung von Keramikmaterialien, wie gute Löslichkeit, Schmelzbarkeit und Verformbarkeit sowie hohe Keramikausbeuten, gekennzeichnet sind.

Es wurde ein Verfahren gefunden, das die Herstellung von entsprechenden Silazanpolymeren erlaubt. Gegenstand der vorliegenden Erfindung ist somit ein Verfahren zur Herstellung von organischen Silazanpolymeren, welches dadurch gekennzeichnet ist, daß
a) mindestens ein Organochlorsilan der Formel (I) 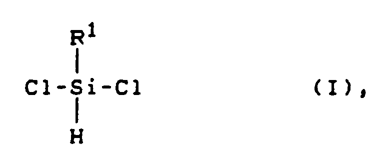 worin
   - R¹ =: Cl, H, C₁ bis C₄-Alkyl oder Phenyl ist, allein oder zusammen mit einem oder mehrenen Organochlorsilan(en) der Formel (II) oder (III) 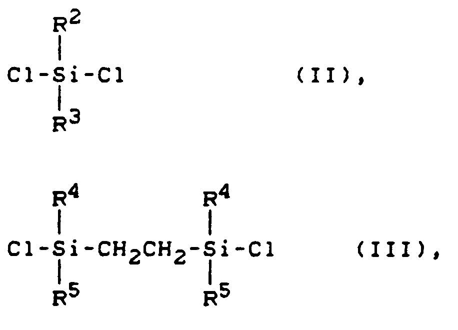
   worin
   - R², R³, R⁴ und R⁵: unabhängig voneinander Cl, C₁- bis C₄-Alkyl, Vinyl oder Phenyl sind, mit Ammoniak in einem inerten Lösungsmittel bei Temperaturen von -80°C bis +120°C unter Bildung eines Ammonolyseprodukt umgesetzt werden, und
b) das Ammonolyseprodukt in Gegenwart eines basischen Katalysators der Formel IV

   R⁶R⁷R⁸R⁹N⁺ A⁻ (IV)

   worin
   - R⁶, R⁷, R⁸ und R⁹: unabhängig voneinander organische Reste mit 1 bis 24 Kohlenstoffatomen sind. A⁻ einem, eine Deprotonierung bewirkenden Alkoxy- oder Hydroxyrest oder einem Metall- oder Nichtmetallkomplexhydrid entspricht, unter Bildung eines organischen Silazanpolymeres polymerisiert wird.

Wie bereits ausgeführt wurde, ist die Verwendung von Chlorsilanen als Ausgangsmaterial für die Herstellung von Silazanpolymeren sowie die basenkatalysierte Polymerisation der entsprechenden Ammonolyseprodukte bereits bekannt. Es wurde bislang jedoch weder beschrieben noch nahegelegt, daß man bei der basenkatalysierten Polymerisation Katalysatoren der allgemeinen Formel (IV) einsetzen kann und dadurch organische Silazanpolymere mit ausgezeichneten Eigenschaften auf einfache Weise erhalten kann.

Das bei dem erfindungsgemäßen Verfahren eingesetzte Organochlorsilangemisch besteht aus einer Kombination von ein oder mehreren Silanen der Formel (I), (II) und (III). Bei dem erfindungsgemäßen Verfahren setzt man mindestens 5 Mol-% eines oder mehrerer Organochlorsilan(e) der Formel (I) ein.

Beispiele für Organochlorsilane der Formel (I), die eingesetzt werden können, sind: Methyldichlorsilan, Phenyldichlorsilan, Dimethylchlorsilan, Phenylmethylchlorsilan, Trichlorsilan und Dichlorsilan.

Beispiele für Organochlorsilane der Formel (II), die eingesetzt werden können, sind:
Dimethyldichlorsilan, Methyltrichlorsilan, Methylvinyldichlorsilan, Vinyltrichlorsilan, Diphenyldichlorsilan, Methylphenyldichlorsilan, Phenyltrichlorsilan, Diethyldichlorsilan, Methylethyldichlorsilan, Dipropyldichlorsilan, Methylpropyldichlorsilan, Ethyltrichlorsilan, Propyltrichlorsilan, iso-Butyltrichlorsilan und Tetrachlorsilan.

Beispiele für Organochlorsilane der Formel (III), die eingesetzt werden können, sind:
1,2-Bis(dimethylchlorsilyl)ethan, 1,2-Bis(methyldichlorsilyl)ethan und 1,2-Bis(trichlorsilyl)ethan.

In einer bevorzugten Ausführungsform des erfindungsgemäßen Verfahrens sind R¹ und R² = Methyl, R³ = Cl, Methyl oder Vinyl und R⁴ und R⁵ = Cl oder Methyl.

In einer bevorzugten Ausführungsform des erfindungsgemäßen Verfahrens werden 0-95 Mol-% eines oder mehrere der Organochlorsilane Methyltrichlorsilan, Dimethyldichlorsilan, Methylvinyldichlorsilan, 1,2-Bis(dimethylchlorsilyl)ethan, 1,2-Bis(methyldichlorsilyl)ethan, und 5-100 Mol-% Methyldichlorsilan gemischt und mit Ammoniak umgesetzt.

Besonders bevorzugt wird ein Gemisch aus 0-70 Mol-% Methyltrichlorsilan, 0-50 Mol-% Dimethyldichlorsilan, Methylvinyldichlorsilan, 1,2-Bis(dimethylchlorsilyl)ethan oder 1,2-Bis(methyldichlorsilyl)ethan und deren Gemische, und 5-100 Mol-% Methyldichlorsilan mit Ammoniak umgesetzt.

Das bei dem erfindungsgemäßen Verfahren eingesetzte Organochlorsilangemisch wird unter Bildung des Ammonolyseprodukts mit Ammoniak umgesetzt. Die Maßnahmen zur Bildung des Ammonolyseprodukts sind nicht kritisch und werden ausführlich in der US-A 4 482 669 (Spalten 7, 8, 9) beschrieben. Beispielsweise kann man die Organochlorsilanmischung mit gasförmigem Ammoniak in einem organischen Lösungsmittel umsetzen und nach dem Abfiltrieren des als Nebenprodukt anfallenden Ammoniumchlorids das organische Lösungsmittel abdestillieren. Bevorzugt sind solche Lösungsmittel, in denen das Ammoniumchlorid geringe Löslichkeit und gute Abtrennbarkeit aufweist, z.B. Ether, aliphatische, aromatische und chlorierte Kohlenwasserstoffe. Die Ammonolyse wird mit einem Überschuß Ammoniak durchgeführt, um sicherzustellen, daß die Reaktion vollständig ist und die Endprodukte möglichst weitgehend chlorfrei sind. Im allgemeinen wird bei einer Temperatur von etwa -80° bis +120°C gearbeitet, vorzugsweise bei -40° bis +40°C.

Bevorzugt werden beim erfindungsgemäßen Verfahren mindestens 1,5 Mol Ammoniak pro Mol siliciumgebundene Chloratome des Organochlorsilangemisches eingesetzt.

In einem weiteren Schritt wird das Ammonolyseprodukt dann in Gegenwart eines basischen Katalysators der Formel (IV), der eine Deprotonierung zu bewirken vermag, unter Bildung eines organischen Silazanpolymers polymerisiert.

Der erfindungsgemäße Katalysator ist vorzugsweise ein Tetraalkylammoniumhydroxid und/oder Tetraalkylammoniumalkoxid. Besonders bevorzugt sind Tetramethylammonium-, Tetraethylammonium-, Tetrapropylammonium-, Tetrabutylammonium-Komplexe mit Hydroxy- und Alkoxyanionen. Ebenfalls bevorzugt sind Benzyltrimethylammonium-, Benzyltriethylammonium-, Benzyltributylammonium-, Trimethyl(2-hydroxyethyl)ammonium-, Dodecyltrimethylammonium-, Dodecyldimethyl(2-hydroxyethyl)ammonium- und Methyltrioctylammonium-Komplexe mit Hydroxy-und Alkoxy-Anionen, wie z.B. Methoxy oder Ethoxy. Ebenfalls bevorzugt sind (C₄- bis C₂₄-Alkyl)trimethylammoniumhydroxid und/oder ein (C₄-bis C₂₄-Alkyl)trimethylammoniummethoxid.

Andere erfindungsgemäße Katalysatoren sind z.B. Tetraalkylammonium-Metall- oder Nichtmetallkomplexhydride, wie z.B. Borhydrid, Tri-sec-butylborhydrid, Triethylborhydrid, tert.-Butyldiisobutylaluminiumhydrid.

Tetraalkylammoniumhalogenide der Formel R₄N⁺X⁻(X = Cl, Br, J) sind dagegen nicht wirksam und werden für dieses Verfahren nicht beansprucht. Vorzugsweise werden Katalysatoren, wie Tetraethylammoniummethoxid, Tetrabutylammoniummethoxid und Benzyltrimethylammoniummethoxid wegen ihrer Verfügbarkeit und guter Löslichkeit eingesetzt.

Der Katalysator kann in Mengen von 0,01 bis 10 Gew.-% eingesetzt werden. Vorzugsweise werden 0,1 bis 3 Gew.-% Katalysator verwendet. Der Katalysator kann auf verschiedene Art und Weise ins Reaktionsgemisch eingebracht werden. Er kann in Substanz oder als Lösung in protischen oder aprotischen organischen Lösungsmitteln eingesetzt werden. Bevorzugt wird der Einsatz von Lösungen in aprotischen organischen Lösungsmitteln. Viele dieser Katalysatoren sind als Lösungen in protischen Lösungsmitteln, wie z.B. Methanol verfügbar. Eine Lösung in einem aprotischen organischen Lösungsmittel, wie z.B. Pyridin, Dimethylsulfoxid, N,N-Dimethylformamid kann auf einfache Weise nach der Methode von Y. Sprinzak (J.Am. Chem Soc., Vol. 80 (1958) 5449-5455) hergestellt werden.

Gegenstand dieser Erfindung ist auch ein organisches Silazanpolymer, dadurch erhältlich, daß
a) mindestens ein Organochlorsilan der Formel (I) 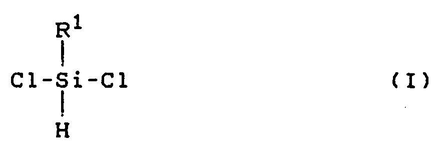
   - R¹ =: Cl, H, C₁ bis C₄-Alkyl oder Phenyl ist, allein oder zusammen mit einem oder mehreren Organochlorsilan(en) der Formeln (II) oder (III) 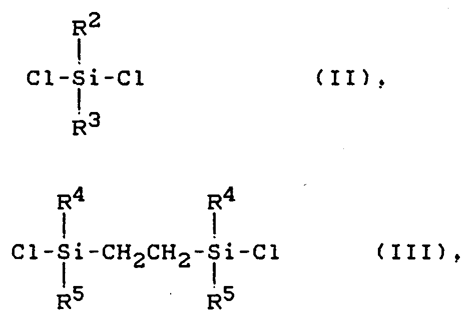
   worin
   R², R³, R⁴ und R⁵ unabhängig voneinander Cl, C₁- bis C₄-Alkyl, Vinyl oder Phenyl sind, mit Ammoniak in einem inerten Lösungsmittel bei Temperaturen von -80°C bis +120°C unter Bildung eines Ammonolyseprodukts umgesetzt werden, und
b) das Ammonopolyseprodukt in Gegenwart eines basischen Katalysators der Formel IV

   R⁶R⁷R⁸R⁹N⁺ A⁻ (IV),

   worin
   R⁶, R⁷, R⁸ und R⁹ unabhängig voneinander organische Reste mit 1 bis 24 Kohlenstoffatomen sind, und A⁻ einem, eine Deprotonierung bewirkenden Alkoxy- oder Hydroxyrest oder einem Metall- oder Nichtmetallkomplexhydrid entspricht, unter Bildung eines organischen Silazanpolymeres polymerisiert wird.

Die Polymerisation wird vorzugsweise in einem Lösungsmittel durchgeführt. Als Lösungsmittel kann man z.B. Ether, wie Tetrahydrofuran (THF), Dialkylether, aliphatische Kohlenwasserstoffe, wie z.B. Pentan, Hexan, aromatische Kohlenwasserstoffe, wie z.B. Benzol, Toluol, Xylol, sowie polare aprotische organische Lösungsmittel, wie z.B. Dimethylsulfoxid (DMSO), N,N-Dimethylformamid (DMF), einsetzen,

Die Polymerisation wird je nach Katalysator bei Temperaturen von 0° bis 200°C, vorzugsweise zwischen 20° und dem Siedepunkt des Lösungsmittels, insbesondere bei 20° bis 80°C, durchgeführt.

Die Polymerisation verläuft durch Reaktion von Si-H mit N-H Gruppen unter Bildung neuer Si-N Bindungen und H₂. Der Fortgang der Reaktion kann anhand der Gasentwicklung erkannt und durch das ¹H-NMR Spektrum des Silazanpolymers nachgewiesen werden. Mit fortschreitender Reaktion wird das Integralverhältnis SiH zu SiCH₃ kleiner. Das Ende der Polymerisation wird dadurch erkannt, daß die Beendigung der Gasentwicklung festgestellt wird,

Im Gegensatz zu den bisher bekannten Verfahren zur basenkatalysierten Polymerisation von Ammonolyseprodukten, müssen die erfindungsgemäßen Katalysatoren nach der Polymerisation nicht neutralisiert werden, Das Produkt wird nach Beendigung der Reaktion auf einfache Weise durch Abdampfen des Lösungsmittels und der flüchtigen Anteile erhalten.

Weiterhin unterliegen die erfindungsgemäßen Katalysatoren bei höheren Temperaturen einer oder mehreren Zersetzungsreaktionen und werden dadurch unwirksam gemacht. Diese Zersetzungsreaktionen sind je nach Struktur des Ammoniumsalzes unterschiedlich und treten bei verschiedenen Temperaturen auf. Die Zersetzungsprodukte sind im allgemeinen Amine und Kohlenwasserstoffe. Dadurch ist eine zusätzliche Möglichkeit zur Steuerung der Polymerisationsreaktionen gegeben.

Die erfindungsgemäßen Silazanpolymere sind in einer bevorzugten Ausführungsform frei von Alkali- und Erdalkalimetallen, was sie besonders geeignet macht für die Weiterverarbeitung zu Hochleistungskeramik.

Bei der Verwendung dieser organischen Silazanpolymere zur Herstellung von Keramikmaterialien werden Silazanpolymere mit guter Löslichkeit, Verformbarkeit und Verarbeitbarkeit für viele Anwendungen gewünscht.

Diese Eigenschaften können durch Änderung der Reaktionsbedingungen der Polymerisation sowie der Zusammensetzung des Silangemischs in weiten Bereichen geändert werden,. Wird beispielsweise das Ammonolyseprodukt von Methyldichlorsilan polymerisiert, erhält man in der Regel ein nicht schmelzbares, unlösliches Polymer. Wird andererseits bei der Ammonolyse mindestens 5 Mol-% an Dialkyldichlorsilanen eingesetzt, erhält man nach der Polymerisation Silazanpolymere mit guten Löslichkeiten und niedrigen Schmelzpunkten. Durch diese Maßnahmen können nach dem erfindungsgemäßen Verfahren Silazanpolymere mit ausgezeichneten Polymereigenschaften auf einfache Weise und reproduzierbar hergestellt werden.

Zur Herstellung von Siliziumnitrid enthaltenden Keramikmaterialien werden die organischen Silazanpolymere in die gewünschte Form gebracht, gegebenenfalls unschmelzbar gemacht, und dann unter Bildung eines Keramikmaterials gesintert. Zu diesem Zweck weist das erfindungsgemäße Silazanpolymer vorzugsweise einen Schmelzpunkt im Bereich von 50°C bis 200°C auf.

Gegenstand dieser Erfindung ist auch ein Verfahren zur Herstellung von Siliziumnitrid enthaltenden Keramikmaterialien, welches darin besteht, daß man das Silazanpolymer unter Bildung eines Keramikmaterials sintert.

In einer bevorzugten Ausführungsform wird dazu geschmolzen, verformt und unter Bildung eines Keramikmaterials gesintert.

In einer besonders bevorzugten Ausführungsform wird das organische Silazanpolymer zur Herstellung von Beschichtungen auf eine Oberfläche aufgebracht oder zur Herstellung von Fasern gesponnen sowie zur Herstellung von Formteilen mit Keramik- oder Metallpulver oder Keramikfasern vermischt und dann durch Einwirkung von Wärme und/oder Druck verformt. Das Silazanpolymer kann nach dem Aufbringen, Verspinnen oder der Formgebung durch Tempern, Oxidieren, Hydrolysieren oder durch Bestrahlung unschmelzbar gemacht werden. Das Silazanpolymer wird dann unter Bildung eines Keramikmaterials bei Temperaturen im Bereich von 800°C bis 2.000°C gesintert. Das Sintern wird im Vakuum oder in einer Inertgasatmosphäre durchgeführt. In dieser Weise erhält man ein aus SiC und Si₃N₄ gebildetes Keramikmaterial. Wird das Sintern mindestens zum Teil in einer H₂- oder NH₃-Gas-Atmosphäre durchgeführt, erhält man eine fast kohlenstofffreie Keramik.

Das erfindungsgemäße Verfahren liefert organische Silazanpolymere mit hoher Qualität. Die Silazanpolymere sind in der Regel in gebräuchlichen organischen Lösungsmitteln gut löslich und sind je nach Zusammensetzung durch gute Schmelzbarkeit und Verarbeitbarkeit gekennzeichnet. Die Silazanpolymere ergeben beim Sintern eine hohe Keramikausbeute von beispielsweise 75 bis 85 Gew.-%.

Der Formgebungsprozeß kann je nach Form des gewünschten Keramikartikels unterschiedlich durchgeführt werden. Beschichtungen können aus Lösungen hergestellt werden. Fasern können versponnen werden. Zur Herstellung von Formkörpern können die Polymere mit Keramik- oder Metallpulver oder Keramikfasern gemischt und dann unter Anwendung von Druck bzw. Wärme durch Spritzgießen, Pressen oder Heißpressen verformt werden.

Anschließend können die Formteile durch Erhitzen an der Luft oder durch Bestrahlen mit einem Elektronenstrahl oder durch Bestrahlen mit ultravioletter Strahlung sowie andere Verfahren unschmelzbar gemacht werden.

Die erfindungsgemäßen organischen Silazanpolymere werden nach der Formgebung bei Temperaturen im Bereich von 800 bis 2000°C unter Bildung von Keramikmaterialien gesintert. Vorzugsweise wird das Sintern in zwei Stufen durchgeführt. Bei Temperaturen von 800° bis 1500°C wird das Silazanpolymer pyrolysiert und in eine zum großen Teil amorphe Keramik überführt. Bei Temperaturen von 1500°C bis 2000°C, je nach Zusatz von Sinterhilfsmitteln, wird das Keramikteil verdichtet. Die Keramikausbeute wird überwiegend durch den Pyrolyseprozeß bis 1500°C bestimmt.

Das Sintern wird im Vakuum oder in einer Inertgasatmosphäre, wie z.B. N₂, He, Ar, durchgeführt. In dieser Weise erhält man ein aus SiC und Si₃N₄ gebildetes Keramikmaterial. Wird das Sintern mindestens zum Teil in einer H₂- oder NH₃-Atmosphäre durchgeführt, erhält man eine fast kohlenstofffreie Keramik, die hauptsächlich aus Si₃N₄ besteht,

Es ist auf diese Weise möglich, Keramikprodukte in hoher Reinheit mit der gewünschten Form und ausgezeichneten physikalischen Eigenschaften in einfacher Weise herzustellen.

Die Erfindung wird durch die folgenden Beispiele weiter beschrieben. Sie dienen lediglich zur Erläuterung und sollen den Schutzumfang der Erfindung in keiner Weise beschränken.

### Beispiele

1. Ammonolyse von Methyldichlorsilan
   In einem 4-l-Vierhalskolben mit Rührer, Thermometer, NH₃-Gaseinleitungsrohr und Trockeneis-Kühler wurden 288 g (2,5 Mol) Methyldichlorsilan und 2 l getrocknetes Toluol vorgelegt. Die Temperatur wurde auf -15°C bis -20°C durch Außenkühlung gesenkt und 190 g (11,2 Mol, 50 % Überschuß) NH₃ wurden während 4 Stunden eingeleitet. Dabei erhöhte sich die Innentemperatur zeitweise auf 10 bis 15°C, sank aber mit Sättigung der Lösung auf unter -20°C. Die Kühlung wurde entfernt und die Lösung langsam auf Raumtemperatur erwärmt, um das überschüssige NH₃ abdampfen zu lassen. Das ausgefallene Ammoniumchlorid wurde durch Filtration abgetrennt und der Filterkuchen dreimal mit je 100 ml Toluol gewaschen. Das Toluol wurde bei reduziertem Druck bis 30°C und 1 mbar abgedampft. Das Ammonolyseprodukt wurde als leicht trübe, farblose Flüssigkeit mit einer Viskosität von 50 mPa.s (25°C) in einer Menge von 134 g erhalten.
   ¹H-NMR (300 MHz, CDCl₃, ppm): δ 0,0-0,3 (br, SiCH₃, Int. 126), 0,5-1,1 (br, NH, Int. 33), 4,3-5,0 (mult, SiH, Int. 38). Anal.: Si, 50,5 %
   Bei der Pyrolyse dieses Produkt in einer Stickstoff-Atmosphäre bis 1400°C bei einer Aufheizungeschwindigkeit von 5°C/min wurde ein keramisches Material mit einer Ausbeute von 48 Gew.-% erhalten.
2. Ammonolyse von Methyldichlorsilan : Dimethyldichlorsilan in einem Verhältnis von 75:25 (Mol-%)
   In einem in Beispiel 1 beschriebenen Vierhalskolben wurden 335 g (2,9 Mol) Methyldichlorsilan, 125 g (0,97 Mol) Dimethyldichlorsilan und 2 l getrocknetes Tetrahydrofuran (THF) vorgelegt. Die Temperatur wurde auf -15°C bis -20°C gesenkt und 300 g (17,6 Mol) NH₃ wurden während 7 Stunden eingeleitet. Die Kühlung wurde entfernt und die Lösung langsam auf Raumtemperatur erwärmt. Das ausgefallene Ammoniumchlorid wurde durch Filtration abgetrennt und der Filterkuchen dreimal mit je 100 ml THF gewaschen. Das THF wurde bei reduziertem Druck bis 40°C und 1 mbar abgedampft. Das Ammonolyseprodukt wurde als leicht trübe, farblose Flüssigkeit in einer Menge von 11 mPa.s (25°C) in einer Menge von 172 g erhalten.
   ¹H-NMR (300 MHz, CDCl₃, ppm): δ 0,0-0,3 (br, SiCH₃, Int. 119), 0,4-1,0 (br, NH, Int. 30), 4,25-5,0 (mult, SiH, Int. 23,1). Anal.: Si, 39,0 %
   Bei der Pyrolyse dieses Produkt in einer Stickstoff-Atmosphäre bis 1400°C bei einer Aufheizungeschwindigkeit von 5°C/min wurde ein keramisches Material mit einer Ausbeute von 24 Gew.-% erhalten.
3. Ammonolyse von Methyldichlorsilan: Methyltrichlorsilan : Methylvinyldichlorsilan in einem Verhältnis von 45:45:10 (Mol-%)
   In einem in Beispiel 1 beschriebenen Vierhalskolben wurden 126 g (1,1 Mol) Methyldichlorsilan, 163,5 g (1,1 Mol) Methyltrichlorsilan, 30,9 (0,219 Mol) Methylvinyldichlorsilan und 2,5 l getrocknetes Toluol vorgelegt. Die Temperatur wurde auf -15°C bis -20°C und 240 g (14,1 Mol) NH₃ wurden während 6 Stunden eingeleitet. Die Kühlung wurde entfernt und die Lösung langsam auf Raumtemperatur erwärmt. Das ausgefallene Ammoniumchlorid wurde durch Filtration abgetrennt und der Filterkuchen dreimal mit je 100 ml Toluol gewaschen. Das Toluol wurde bei reduziertem Druck bis 60°C und 1 mbar abgedampft. Das Ammonolyseprodukt wurde als leicht trübe, farblose Flüssigkeit mit einer Viskosität von 5200 mPa.s (25°C) in einer Menge von 128 g erhalten.
   ¹H-NMR (300 MHz, CDCl₃, ppm): δ 0,0-0,4 (br, SiCH₃, Int. 122), 0,5-1,2 (br, NH, Int. 43), 4,35-4,9 (br, mult, SiH, Int. 16,5), 5,65-6,2 (mult, SiCH=CH₂, Int. 10).
4. Polymerisation von (1) mit 0,25 Gew.-% Benzyltrimethylammoniummethoxid
   In einen 500-ml-Zweihalskolben mit Magnetrührer und Kühler wurden 10 g des Ammonolyseprodukts aus Beispiel 1 und 150 g getrocknetes THF vorgelegt und mit N₂ überlagert. Eine Mischung von 0,2 g (0,25 Gew.-%) einer 12,2 %igen Lösung von Benzyltrimethylammoniummethoxid in Dimethylsulfoxid und 5 g THF wurde hergestellt und innerhalb 10 min zugegeben. Eine leichte Gasentwicklung wurde beobachtet. Die Lösung wurde 30 min bei 25°C gerührt und 3 h am Rückfluß gekocht. Das THF wurde bei 25°C und 30 mbar abdestilliert und das Produkt bis 120°C und 1 mbar von flüchtigen Anteilen befreit. Das Silazanpolymer wurde als rosafarbiger, spröder Feststoff mit einem Schmelzpunkt von 75°C in eine Menge von 5,8 g erhalten.
   ¹H-NMR (300 MHz, Aceton-d₆, ppm): δ 0,0-0,5 (br, SiCH₃, Int. 147,1), 1,0-2,4 (br, NH, Int. 23,3), 3,4-3,5 (br, SiOCH₃, Int. 1), 4,4-5,1 (br, SiH, Int. 31,6). IR (KBr, cm⁻¹): 3400 (br, m), 2960 (sh, m), 2900 (sh, w), 2120 (sh, s), 1400 (br, w), 1260 (sh, s), 1175 (br, s), 850-1020 (br, vs), 760 (br, s). Anal.: C, 22,9 %; N 25,1 %; 0, 4,6 %; Si 44,0 %.
   Bei der Pyrolyse dieses Polysilazans in einer Stickstoff-Atmosphäre bis 1400°C bei einer Aufheizgeschwindigkeit von 5°C/min wurde ein Siliziumnitrid enthaltendes keramisches Material mit einer Ausbeute von 77,7 Gew.-% erhalten.
5. Polymerisation von (1) mit 1,0 Gew.-% Benzyltrimethylammoniummethoxid
   In einem 250-ml-Zweihalskolben mit Magnetrührer und Kühler wurden 10 g des Ammonolyseprodukts aus Beispiel 1 und 40 g getrocknetes THF vorgelegt und mit N₂ überlagert. Eine Mischung von 0,82 g (1 Gew.-%) einer 12,2 %igen Lösung von Benzyltrimethylammoniummethoxid in Dimethylsulfoxid und 10 g THF wurde innerhalb 10 min zugegeben. Eine leichte Gasentwicklung wurde beobachtet. Die Lösung wurde 90 min bei 25° gerührt und 2 h am Rückfluß gekocht. Das THF wurde bei 25°C und 30 mbar abdestilliert und das Produkt bis 80°C und 1 mbar von flüchtigen Anteilen befreit. Das Silazanpolymer wurde als unlöslicher, spröder Feststoff ohne Schmelzpunkt in einer Menge von 8,8 g erhalten.
   Bei der Pyrolyse dieses Silazanpolymers in einer Stickstoff-Atmosphäre bis 1400°C bei einer Aufheizgeschwindigkeit von 5°C/min wurde ein Siliziumnitrid enthaltendes keramisches Material mit einer Ausbeute von 84,2 Gew.-% erhalten.
6. Polymerisation von (2) mit 1,0 Gew.-% Benzyltrimethylammoniummethoxid
   In einem 100-ml-Zweihalskolben mit Magnetrührer und Kühler wurden 20 g des Ammonolyseprodukts aus Beispiel 2 und 50 g getrocknetes THF vorgelegt und mit N₂ überlagert. Eine Mischung von 1,6 g (1 Gew.-%) einer 12,2 %igen Lösung von Benzyltrimethylammoniummethoxid in Dimethylsulfoxid und 10 g THF wurde hergestellt und innerhalb 10 min zugegeben. Eine starke Gasentwicklung wurde beobachtet. Die Lösung wurde 1 h bei 25°C gerührt und 4 h am Rückfluß gekocht. Das THF wurde bei 25°C und 30 mbar abdestilliert und das Produkt bis 120°C und 1 mbar von flüchtigen Anteilen befreit. Das Silazanpolymer wurde als gelblicher, spröder Feststoff mit einem Schmelzpunkt von 72°C in einer Menge von 16,1 g erhalten.
   ¹H-NMR (300 MHz, Aceton-d₆, ppm): δ 0,00-0,5 (br, SiCH₃, Int. 164), 1,0-2,0 (br, NH, Int. 29), 3,4-3,5 (br, SiOCH₃, Int. 3), 4,5-5,1 (br, SiH, Int. 13,3). IR (KBr, cm⁻¹): 3400 (br, m), 2960 (sh, m), 2900 (sh, w), 2120 (sh, m), 1400 (br, w), 1260 (sh, s), 1160 (br, s), 850-1000 (br, vs), 750 (br, m). Anal.: Si, 41,5 %.
   Bei der Pyrolyse dieses Silazanpolymers in einer Stickstoff-Atmosphäre bis 1400°C bei einer Aufheizgeschwindigkeit von 5°C/min wurde ein Siliziumnitrid enthaltendes keramisches Material mit einer Ausbeute von 74,8 Gew.-% erhalten.
7. Polymerisation von (3) mit 1,0 Gew.-% Benzyltrimethylammoniummethoxid
   In einem 100-ml-Zweihalskolben mit Magnetrührer und Kühler wurden 10 g des Ammonolyseprodukts aus Beispiel 3 und 40 g getrocknetes THF vorgelegt und mit N₂ überlagert. Eine Mischung von 0,82 g (1 Gew.-%) einer 12,2 %igen Lösung von Benzyltrimethylammoniummethoxid in Dimethylsulfoxid und 10 g THF wurde innerhalb 10 min zugegeben. Eine heftige Gasentwicklung wurde beobachtet. Die Lösung wurde 4 h bei 25°C und 7 h am Rückfluß gekocht. Das THF wurde bei 25°C und 30 mbar abdestilliert und das Produkt bis 200°C und 30 mbar von flüchtigen Anteilen befreit. Das Silazanpolymer wurde als weißer Feststoff mit einem Schmelzpunkt von 160°C in einer Menge von 8,8 g erhalten.
   ¹H-NMR (300 MHz, CDCl₃, ppm): δ 0,0-0,5 (br, SiCH₃, Int. 143), 0,5-1,3 (br, NH, Int. 33), 3,4-3,5 (br, SiOCH ₃, Int. 3), 4,5-5,0 (br, SiH, Int. 10), 5,6-6,2 (br, SiCH=CH₂, Int. 12). IR (KBr, cm⁻¹): 3400 (br, m), 2960 (sh, m), 2120 (sh, m), 1590 (br, w), 1400 (sh, w), 1260 (sh, s), 1170 (br, s), 880-1000 (br, vs), 750 (br, s). Anal.: Si, 42,0 %.
   Bei der Pyrolyse dieses Silazanpolymers in einer Stickstoff-Atmosphäre bis 1400°C bei einer Aufheizgeschwindigkeit von 5°C/min wurde ein Siliziumnitrid enthaltendes keramisches Material mit einer Ausbeute von 80,2 Gew.-% erhalten.
8. Polymerisation von (1) mit Tetramethylammoniumhydroxid
   In einem 100-ml-Einhalskolben mit Magnetrührer und Kühler wurden 0,1 g Tetramethylammoniumhydroxid und 40 g THF vorgelegt und mit N₂ überlagert. Eine Lösung von 10 g des Ammonolyseprodukts aus Beispiel 1 in 10 ml THF wurde zugegeben. Eine leichte Gasentwicklung wurde beobachtet. Die Lösung 30 min bei 25°C gerührt und dann 7 h am Rückfluß gekocht. Das THF wurde bei 25°C und 30 mbar abdestilliert und das Produkt bis 120°C und 1 mbar von flüchtigen Anteilen befreit. Das Silazanpolymer wurde als unlöslicher, gelblicher Feststoff in einer Menge von 8,1 g erhalten.
   Bei der Pyrolyse dieses Silazanpolymers in einer Stickstoff-Atmosphäre bis 1400°C bei einer Aufheizgeschwindigkeit von 5°C/min wurde ein Siliziumnitrid enthaltendes keramisches Material mit einer Ausbeute von 83,8 Gew.-% erhalten.
9. Polymerisation von (1) mit 1 Gew.-% Dimethyldodecyl-(2-hydroxyethyl)ammoniumhydroxid
   In einem 100-ml-Zweihalskolben mit Magnetrührer und Kühler wurden 10 g des Ammonolyseprodukts aus Beispiel 1 und 45 g getrocknetes THF vorgelegt und mit N₂ überlagert. Eine Mischung von 0,2 g (1 Gew.-%) einer 50 %igen Lösung von Dimethyldodecyl(2-hydroxyethyl)ammoniumhydroxid in Methanol und 5 g THF wurde innerhalb 10 min zugegeben. Eine leichte Gasentwicklung wurde beobachtet. Die Lösung wurde 1 h bei 25°C gerührt und 10 h am Rückfluß gekocht. Das THF wurde bei 25°C und 30 mbar abdestilliert und das Produkt bis 120°C und 1 mbar von flüchtigen Anteilen befreit. Das Silazanpolymer wurde als roafarbiges, klebriges Wachs in einer Menge von 5,4 g erhalten.
   ¹H-NMR (300 MHz, Aceton-d₆, ppm): δ 0,00-0,5 (br, SiCH₃, Int. 166), 1,0-2,0 (br, NH, Int. 44), 3,4-3,5 (br, SiOCH₃, Int. 3), 4,4-5,0 (br, SiH, Int. 30). IR (KBr, cm⁻¹): 3400 (br, m), 2995 (sh, m), 2120 (sh, m), 1400 (br, w), 1260 (sh, s), 1170 (br, s), 880-1000 (br, vs), 760 (br, m).
   Bei der Pyrolyse dieses Silazanpolymers in einer Stickstoff-Atmosphäre bis 1400°C bei einer Aufheizgeschwindigkeit von 5°C/min wurde ein Siliziumnitrid enthaltendes keramisches Material mit einer Ausbeute von 85,7 Gew.-% erhalten.
10. Ammonolyse von Methyldichlorsilan und Polymerisation mit Tetrabutylammoniumhydroxid
   In einem 4-l-Vierhalskolben mit Rührer, Thermometer, NH₃-Gaseinleitungsrohr und Trockeneis-Kühler wurden 368 g (3,2 Mol) Methyldichlorsilan und 2,5 l getrocknetes Toluol vorgelegt. Dann wurden 245 g (17,5 Mol, Überschuß) NH₃ während 4 Stunden eingeleitet. Dabei erhöht sich die Innentemperatur zeitweise auf 30°C, sank aber mit Sättigung der Lösung auf unter 20°C. Der Kühler wurde entfernt um das überschüssige NH₃ abdampfen zu lassen. Das ausgefallene Ammoniumchlorid wurde durch Filtration abgetrennt und der Filterkuchen dreimal mit je 100 ml Toluol gewaschen.
   Das Filtrat (2300 g) wurde in einem 3-l-Vierhalskolben mit Rührer, Thermometer, Tropftrichter und Wasserkühler vorgelegt.
   Eine Mischung von 2,72 g (ca. 0,25 Gew.-%) einer 25 %igen Lösung von Tetrabutylammoniumhydroxid in Methanol und 20 g Toluol wurde über 20 Minuten zugetropft. Eine starke Gasentwicklung wurde beobachtet. Die Lösung wurde 3 h bei 23°C gerührt und 3 h am Rückfluß gekocht. Das Produkt wurde bis 60°C und 1 mbar von Toluol und flüchtigen Anteilen befreit. Das Silazanpolymer wurde als weißer, spröder Feststoff mit einem Schmelzpunkt von 153°C in einer Menge von 162 g erhalten.
   ¹H-NMR (300 MHz, CDCl₃, ppm): δ 0,00-0,5 (br, SiCH₃, Int. 131,8), 0,7-1,5 (br, NH, Int. 22), 3,4-3,5 (br, SiOCH₃, Int. 1), 4,3-5,0 (br, SiH, Int. 27,7). Anal.: Si, 45,0 %. Das Produkt enthält zusätzlich 80 ppm Chlorid und weniger als 1 ppm Kalium und Iod. Bei der Pyrolyse dieses Silazanpolymers in einer Stickstoff-Atmosphäre bis 1200°C bei einer Aufheizgeschwindigkeit von 0,5°C/min wurde ein Siliziumnitrid enthaltendes keramisches Material mit einer Ausbeute von 83,2 Gew.-% erhalten.
11. Vergleichsbeispiel: Polymerisation von (1) mit 1,0 Gew.-% Tetramethylammoniumbromid
   In einem 100 ml-Zweihalskolben mit Magnetrührer und Kühler wurden 0,1 g Tetramethylammoniumbromid und 40 g getrocknetes THF vorgelegt und mit N₂ überlagert. Dann wurden 10 g des Ammonolyseprodukts aus Beispiel 1 in 10 g THF zugegeben. Es wurde keine Gasentwicklung beobachtet. Die Lösung wurde 60 min bei 25°C gerührt und dann 6 h am Rückfluß gekocht. Das THF wurde bei 25°C und 30 mbar abdestilliert und das Produkt bis 80°C und 1 mbar von flüchtigen Anteilen befreit. Das Silanzan wurde als ein trübes, bewegliches Öl in einer Menge von 6,5 g erhalten.
   ¹H-NMR (300 MHz, CDCl₃, ppm): δ 0,0-0,3 (br, SiCH₃, Int. 150), 0,5-1,2 (br, NH, Int. 35), 4,3-5,0 (mult, SiH, Int. 45). IR (KBr, cm⁻¹): 3380 (br, m), 2960 (sh, m), 2900 (sh, w), 2120 (sh, vs), 1400 (sh, w), 1260 (sh, s), 1170 (br, s), 700-1000 (br, vs). Anhand des ¹H NMR Integralverhältnisses SiH/SiCH₃ = 0,30 wurde erkannt, daß dieses Produkt nicht polymerisiert war und vom Ausgangssubstanz (SiH/SiCH₃ = 0,30) kaum zu unterscheiden ist.
12. Vergleichsbeispiel: Polymerisation mit Kaliumhydrid
   In einem 2-l-Dreihalskolben mit Rührer, Thermometer, Tropftrichter und Kühler wurden 5,71 g (2,7 Gew.-%) einer 35 %igen KH-Dispersion in Mineralöl vorgelegt und mit N₂ überlagert. Die Dispersion wurde zweimal mit ca. 50 ml getrocknetem Hexan gewaschen, um das Mineralöl zu entfernen. Dann gab man 800 ml getrocknetes THF dazu. Unter ständigen Rühren wurde dann eine Lösung von 74 g des Ammonolyseprodukts aus Beispiel 1 in 200 ml THF während 10 min zugetropft. Eine Gasentwicklung wurde beobachtet. Nach 2,5 h war die Gasentwicklung zu Ende. Man gab 10,6 g Methyliodid zu und rührte über Nacht. Das THF wurde bei 25°C und 30 mbar abgedampft und das Produkt in 300 ml Hexan gelöst. Das ausgefallene KJ wurde durch Filtration abgetrennt und das Produkt bei 30°C und 1 mbar von Lösungsmittel und flüchtigen Bestandteilen befreit. Das Produkt wurde als weißer Feststoff ohne Schmelzpunkt in einer Menge von 74 g erhalten.
   ¹H-NMR (300 MHz, CDCl₃, ppm): δ 0,0-0,5 (br, SiCH₃, Int. 102), 0,5-1,8 (br, NH, Int. 44), 2,5 (br, NCH₃, Int. 3) 4,5-5,0 (br, SiH, Int. 18). IR (KBr, cm⁻¹): 3400 (br, m), 2960 (sh, m), 2900 (sh, w), 2130 (sh, m), 1410 (br, w), 1260 (sh, s), 1150-1200 (br, s), 820-1030 (br, vs), 750 (br, m). Anal.: C, 22,3 %; N, 21,1 %; Si, 42,6 %. Zusätzlich enthält das Produkt 90 ppm Kalium und 350 ppm Iod.
   Bei der Pyrolyse dieses Silazanpolymers in einer Stickstoff-Atmosphäre bis 1400°C bei einer Aufheizgeschwindigkeit von 5°C/min wurde ein Siliziumnitrid enthaltendes keramisches Material mit einer Ausbeute von 71 Gew.-% erhalten.
13. Vergleichsbeispiel: Ammonolyse von Methyldichlorsilan und Dimethyldichlorsilan in einem Verhältnis von 67:33 (Mol-%) und Polymerisation mit KH
   a) Ammonolyse
      In einem 4-l-Vierhalskolben mit Rührer, Thermometer, NH₃-Gaseinleitungsrohr und Trockeneis-Kühler wurden 414 g (3,6 Mol) Methyldichlorsilan, 150 g (1,16 Mol) Dimethyldichlorsilan und 2,2 l getrocknetes THF vorgelegt. Die Temperatur wurde auf -15°C bis -20°C durch Außenkühlung gesenkt und 365 g (21,5 Mol, 50-% Überschuß) NH₃ wurden während 7 Stunden eingeleitet. Dabei erhöhte sich die Innentemperatur zeitweise auf 10-15°C, sank aber mit Sättigung der Lösung auf unter -20°C. Die Kühlung wurde entfernt und die Lösung langsam auf Raumtemperatur erwärmt, um das überschüssige NH₃ abdampfen zu lassen. Das angefallene Ammoniumchlorid wurde durch Filtration abgetrennt und der Filterkuchen dreimal mit 100 ml THF gewaschen.
   b) Polymerisation
      In einem 3 l Dreihalskolben mit Rührer, Thermometer, Tropftrichter und Kühler wurden 11,5 g (ca. 2 Gew.-%) einer 35 %igen KH-Dispersion in Mineralöl vorgelegt. Die Dispersion wurde dreimal mit ca. 50 ml getrocknetem Hexan gewaschen um das Mineralöl zu entfernen. Dann gab man die THF-Lösung des Ammonolyseprodukts aus (a) innerhalb 15 min dazu. Eine starke Gasentwicklung wurde beobachtet. Nach 5 h war die Gasentwicklung zu Ende. Man gab 15 g Methyliodid zu und rührte über Nacht. Das THF wurde bei 25°C und 30 mbar abgedampft und das Produkt in 1020 ml Hexan gelöst. Das ausgefallene KJ wurde durch Filtration abgetrennt und das Produkt bei 40°C und 1 mbar von Lösungsmittel und flüchtigen Bestandteilen befreit. Das Produkt wurde als weißer Feststoff mit einem Schmelzpunkt von 95°C in einer Menge von 198 g erhalten.
   ¹H-NMR (300 MHz, CDCl₃, ppm): δ 0,0-0,5 (br, SiCH₃, Int. 146), 0,5-1,8 (br, NH, Int. 23), 2,5 (br, NCH₃, Int. 1) 4,5-5,0 (br, SiH, Int. 14). IR (KBr, cm⁻¹): 3400 (br, m), 2960 (sh, m), 2900 (sh, w), 2120 (sh, m), 1410 (br, w), 1260 (sh, s), 1160 (br, s), 870-1020 (br, vs), 790 (br, w). Anal.: Si, 44,2 %. Zusätzlich enthielt das Produkt 20 ppm Kalium und 30 ppm Iod.
   Bei der Pyrolyse dieses Silazanpolymers in einer Stickstoff-Atmosphäre bis 1400°C bei einer Aufheizgeschwindigkeit von 5°C/min wurde ein Siliziumnitrid enthaltendes keramisches Material mit einer Ausbeute von 64 Gew.-% erhalten.

## Patentansprüche

1. Verfahren zur Herstellung von organischen Silazanpolymeren, dadurch gekennzeichnet, daß
a) mindestens ein Organochlorsilan der Formel (I) 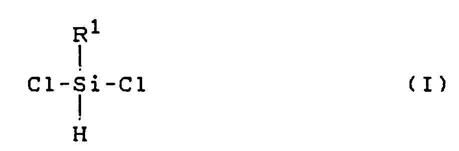 worin
R¹ = Cl, H, C₁- bis C₄-Alkyl oder Phenyl ist, allein oder zusammen mit einem oder mehreren Organochlorsilan(en) der Formeln (II) oder (III) 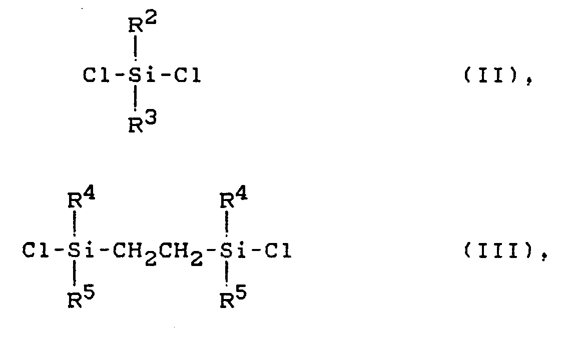
worin
R², R³, R⁴ und R⁵ unabhängig voneinander Cl, C₁- bis C₄-Alkyl, Vinyl oder Phenyl sind, mit Ammoniak in einem inerten Lösungsmittel bei Temperaturen von -80°C bis +120°C unter Bildung eines Ammonolyseprodukts umgesetzt werden, und
b) das Ammonolyseprodukt in Gegenwart eines basischen Katalysators der Formel (IV)
R⁶R⁷R⁸R⁹N⁺ A⁻ (IV),
worin
R⁶, R⁷, R⁸ und R⁹ unabhängig voneinander organische Reste mit 1 bis 24 Kohlenstoffatomen sind und A⁻ einem; eine Deprotonierung bewirkenden Alkoxy- oder Hydroxyrest oder einem Metall- oder Nichtmetallkomplexhydrid entspricht, unter Bildung eines organischen Silazanpolymeres polymerisiert wird.

2. Verfahren gemäß Anspruch 1, dadurch gekennzeichnet, daß R¹ und R² = Methyl, R³ = Cl, Methyl oder Vinyl und R⁴ und R⁵ = Cl oder Methyl sind.

3. Verfahren gemäß Anspruch 1, dadurch gekennzeichnet, daß ein Gemisch aus 0-70 mol-% Methyltrichlorsilan, 0-50 mol-% Dimethyldichlorsilan, Methylvinyldichlorsilan, 1,2-Bis-(dimethylchlorsilyl)ethan oder 1,2-Bis-(methyldichlorsilyl)ethan und deren Gemische, und 5-100 mol-% Methyldichlorsilan mit Ammoniak umgesetzt werden.

4. Verfahren gemäß Anspruch 1, dadurch gekennzeichnet, daß Methyldichlorsilan mit Ammoniak umgesetzt wird.

5. Verfahren gemäß einem oder mehreren der Ansprüche 1 bis 4, dadurch gekennzeichnet, daß der Katalysator ein Tetraalkylammoniumhydroxid und/oder Tetraalkylammoniumalkoxid ist.

6. Verfahren gemäß Anspruch 5, dadurch gekennzeichnet, daß der Katalysator Tetramethylammoniumhydroxid, Tetramethylammoniumethoxid, Tetraethylammoniumhydroxid, Tetraethylammoniummethoxid, Tetrabutylammoniumhydroxid, Tetrabutylammoniummethoxid, Benzyltrimethylammoniumhydroxid, Benzyltrimethylammoniummethoxid; ein (C₄- bis C₂₄-Alkyl)trimethylammoniumhydroxid und/oder ein (C₄-bis C₂₄-Alkyl) trimethylammoniummethoxid ist.

7. Organisches Silazanpolymer, dadurch erhältlich, daß
a) mindestens ein Organochlorsilan der Formel (I) 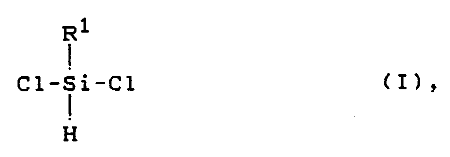 worin
R¹ = Cl, H, C₁ bis C₄-Alkyl oder Phenyl ist, allein oder zusammen mit einem oder mehreren Organochlorsilan(en) der Formeln (II) oder (III) 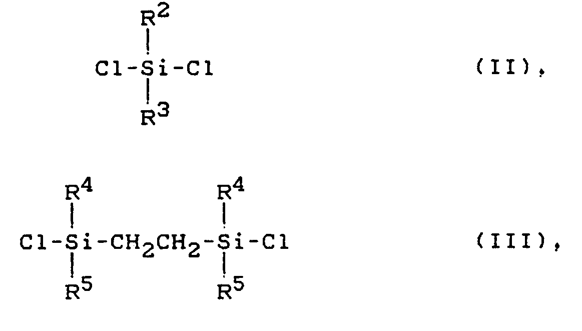
worin
R², R³, R⁴ und R⁵ unabhängig voneinander Cl, C₁- bis C₄-Alkyl, Vinyl oder Phenyl sind, mit Ammoniak in einem inerten Lösungsmittel bei Temperaturen von -80°C bis +120°C unter Bildung eines Ammonolyseprodukts umgesetzt werden, und
b) das Ammonolyseprodukt in Gegenwart eines basischen Katalysators der Formel (IV)
R⁶R⁷R⁸R⁹N⁺ A⁻ (IV),
worin
R⁶, R⁷, R⁸ und R⁹ unabhängig voneinander organische Reste mit 1 bis 24 Kohlenstoffatomen sind, A⁻ einem, eine Deprotonierung bewirkenden Alkoxy- oder Hydroxyrest oder einem Metall- oder Nichtmetallkomplexhydrid entspricht, unter Bildung eines organischen Silazanpolymeres polymerisiert wird,

8. Organisches Silazanpolymer gemäß Anspruch 7, dadurch gekennzeichnet, daß das Silazanpolymer frei von Alkali- und Erdalkalimetallen ist.

9. Verfahren zur Herstellung von Keramikmaterialien, dadurch gekennzeichnet, daß
a) mindestens ein Organochlorsilan der Formel (I) 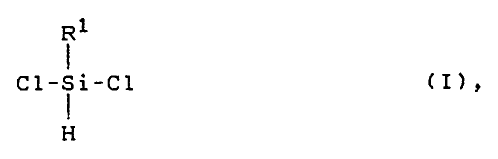 worin
R¹ = Cl, H, C₁- bis C₄-Alkyl oder Phenyl ist, allein oder zusammen mit einem oder mehreren Organochlorsilan(en) der Formel (II) oder (III) 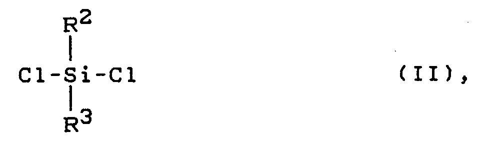 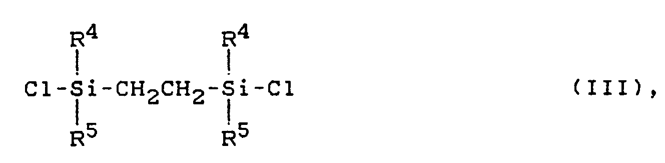 worin
R², R³, R⁴ und R⁵ unabhängig voneinander Cl, C₁- bis C₄-Alkyl, Vinyl oder Phenyl sind, mit Ammoniak in einem inerten Lösungsmittel bei Temperaturen von -80°C bis +120°C unter Bildung eines Ammonolyseprodukts umgesetzt werden, und
b) das Ammonolyseprodukt in Gegenwart eines basischen Katalysators der Formel (IV)
R⁶R⁷R⁸R⁹N⁺ A⁻ ,
worin
R⁶, R⁷, R⁸ und R⁹ unabhängig voneinander organische Reste mit 1 bis 24 Kohlenstoffatomen sind; A⁻ einem, eine Deprotonierung bewirkenden Alkoxy- oder Hydroxyrest oder einem Metall- oder Nichtmetallkomplexhydrid entspricht, unter Bildung eines organischen Silazanpolymeres polymerisiert wird, und
c) das Silazanpolymer unter Bildung eines Keramikmaterials gesintert wird.

10. Verfahren gemäß Anspruch 9, dadurch gekennzeichnet, daß man das Silazanpolymer schmilzt, verformt und unter Bildung eines Keramikmaterials sintert.

11. Verfahren gemäß Anspruch 10, dadurch gekennzeichnet, daß das Silazanpolymer zur Beschichtung eines Substrats auf eine Oberfläche aufgebracht und unter Bildung einer Keramikbeschichtung gesintert wird,

12. Verfahren gemäß Anspruch 10, dadurch gekennzeichnet, daß das Silazanpolymer mit Keramik- oder Metallpulver oder Keramikfasern vermischt, die Mischung durch Einwirken von Wärme und/oder Druck in eine Form gebracht und unter Bildung eines Keramikmaterials gesintert wird.

13. Verfahren gemäß einem oder mehreren der Ansprüche 10 bis 12, dadurch gekennzeichnet, daß das Silazanpolymer nach der Formgebung durch Tempern, Oxidieren, Hydrolysieren oder durch Bestrahlung unschmelzbar gemacht und unter Bildung eines Keramikmaterials gesintert wird,

14. Verfahren gemäß einem oder mehreren der Ansprüche 10 bis 13, dadurch gekennzeichnet, daß das Sintern bei Temperaturen von 800°C bis 2000°C durchgeführt wird.

15. Verfahren gemäß Anspruch 14, dadurch gekennzeichnet, daß das Sintern im Vakuum oder in einer Inertgasatmosphäre durchgeführt wird.

16. Verfahren gemäß Anspruch 14, dadurch gekennzeichnet, daß das Sintern mindestens zum Teil in einer H₂- oder NH₃-Atmosphäre unter Bildung einer fast kohlenstofffreien Keramik durchgeführt wird.

## Claims

1. A process for the preparation of organic silazane polymers, characterised in that
a) at least one organochlorosilane corresponding to formula (I) 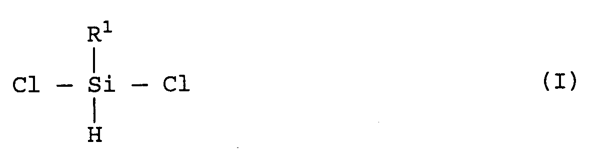 wherein
R¹ = Cl, H, C₁- to C₄-alkyl or phenyl is reacted, alone or together with one or more organochlorosilanes corresponding to formula (II) or (III) 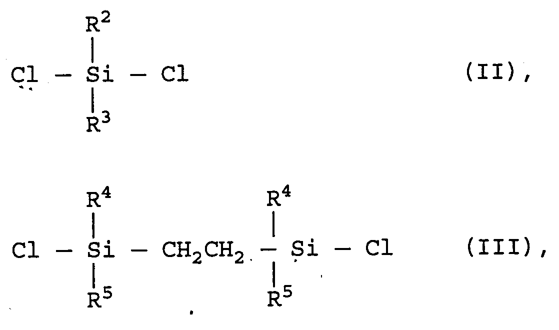
wherein
R², R³, R⁴ and R⁵ denote, independently of one another, Cl, C₁- to C₄-alkyl, vinyl or phenyl, with ammonia in an inert solvent at temperatures from -80°C to +120 °C to form a product of ammonolysis, and
b) the product of ammonolysis is polymerised in the presence of a basic catalyst corresponding to formula (IV)
R⁶R⁷R⁸R⁹N⁺ A⁻ (IV),
wherein
R⁶, R⁷, R⁸ and R⁹ denote, independently of one another, organic groups with 1 to 24 carbon atoms and A⁻ stands for an alkoxy or hydroxy group or a metal or non-metal complex hydride capable of bringing about deprotonisation, to form an organic silazane polymer.

2. A process according to claim 1, characterised in that R¹ and R² = methyl, R³ = Cl, methyl or vinyl, and R⁴ and R⁵ = Cl or methyl.

3. A process according to claim 1, characterised in that a mixture of 0-70 mole % of methyltrichlorosilane, 0-50 mole % of dimethyldichlorosilane, methylvinyldichlorosilane, 1,2-bis-(dimethylchlorosilyl)-ethane or 1,2-bis-(methyldichlorosilyl)-ethane and mixtures thereof, and 5-100 mole % of methyldichlorosilane is reacted with ammonia.

4. A process according to claim 1, characterised in that methyldichlorosilane is reacted with ammonia.

5. A process according to one or more of claims 1 to 4, characterised in that the catalyst is a tetraalkylammonium hydroxide and/or tetraalkylammonium alkoxide.

6. A process according to claim 5, characterised in that the catalyst is tetramethylammonium hydroxide, tetramethylammonium methoxide, tetraethyl-ammonium hydroxide, tetraethylammonium methoxide, tetrabutylammonium hydroxide, tetrabutylammonium methoxide, benzyltrimethylammonium hydroxide, benzyltrimethylammonium methoxide, a (C₄- to C₂₄-alkyl) trimethylammonium hydroxide and/or a (C₄- to c₂₄-alkyl) trimethylammonium methoxide.

7. Organic silazane polymer, obtainable by reacting
a) at least one organochlorosilane corresponding to formula (I) 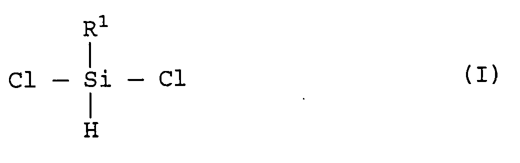 wherein
R¹ = Cl, H, C₁ to C₄-alkyl or phenyl, alone or together with one or more organochlorosilanes corresponding to formula (II) or (III) 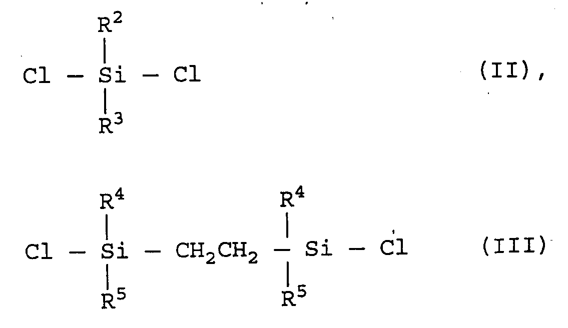
wherein
R², R³, R⁴ and R⁵ denote, independently of one another, Cl, C₁- to C₄-alkyl, vinyl or phenyl, with ammonia in an inert solvent at temperatures from -80°C to +120 °C to form a product of ammonolysis, and
b) the product of ammonolysis is polymerised in the presence of a basic catalyst corresponding to formula (IV)
R⁶R⁷R⁸R⁹N⁺ A⁻ (IV),
wherein
R⁶, R⁷, R⁸ and R⁹ denote, independently of one another, organic groups with 1 to 24 carbon atoms and A⁻ stands for an alkoxy or hydroxy group or a metal or non-metal complex hydride capable of bringing about deprotonisation, to form an organic silazane polymer.

8. Organic silazane polymer according to claim 7, characterised in that the silazane polymer is free from alkali metals and alkaline earth metals.

9. A process for the preparation of ceramic materials, characterised in that
a) at least one organochlorosilane corresponding to formula (I) 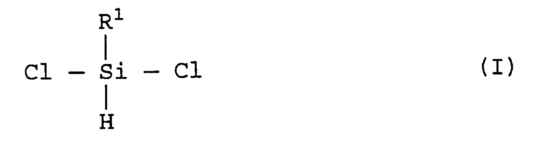 wherein
R¹ = Cl, H, C₁- to C₄-alkyl or phenyl is reacted, alone or together with one or more organochlorosilanes corresponding to formula (II) or (III) 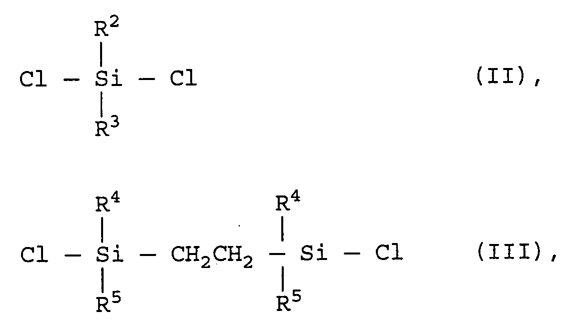
wherein
R², R³, R⁴ and R⁵ denote, independently of one another, Cl, C₁- to C₄-alkyl, vinyl or phenyl, with ammonia in an inert solvent at temperatures from -80°C to +120 °C to form a product of ammonolysis, and
b) the product of ammonolysis is polymerised in the presence of a basic catalyst corresponding to formula (IV)
R⁶R⁷R⁸R⁹N⁺ A⁻
wherein
R⁶, R⁷, R⁸ and R⁹ denote, independently of one another, organic groups with 1 to 24 carbon atoms and A⁻ stands for an alkoxy or hydroxy group or a metal or non-metal complex hydride capable of bringing about deprotonisation, to form an organic silazane polymer, and
c) the silazane polymer is sintered to form a ceramic material.

10. A process according to claim 9, characterised in that the silazane polymer is melted, moulded and sintered to form a ceramic material.

11. A process according to claim 10, characterised in that the silazane polymer is applied to a surface to coat a substrate and is sintered to form a ceramic coating.

12. A process according to claim 10, characterised in that the silazane polymer is mixed with ceramic or metal powder or ceramic fibres, the mixture is moulded by the action of heat and/or pressure and sintered to form a ceramic material.

13. A process according to one or more of claims 10 to 12, characterised in that after the silazane polymer has been moulded, it is rendered infusible by tempering, oxidation, hydrolysis or irradiation and is sintered to form a ceramic material.

14. A process according to one or more of claims 10 to 13, characterised in that sintering is carried out at temperatures from 800 °C to 2000 °C.

15. A process according to claim 14, characterised in that sintering is carried out in a vacuum or in an inert gas atmosphere.

16. A process according to claim 14, characterised in that sintering is carried out at least in part in an H₂ or NH₃ atmosphere to form a ceramic which is almost free from carbon.

## Revendications

1. Procédé de préparation de polymères organiques de silazanes caractérisé en ce que :
a) on fait réagir au moins un organochlorosilane de formule (I) 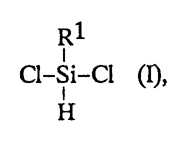 dans laquelle
R¹ = Cl, H, alkyle en C₁-C₄ ou phényle,
seul ou avec un ou plusieurs organochlorosilane de formule (II) ou (III) 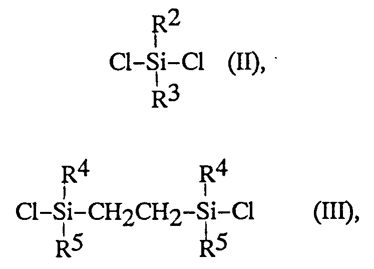
dans lesquelles
R², R³, R⁴ et R⁵ représentent chacun, indépendamment les uns des autres, Cl, un groupe alkyle en C₁-C₄, vinyle ou phényle,
avec l'ammoniac dans un solvant inerte à des températures allant de -80 à +120°C, ce qui donne un produit d'ammoniolyse et
b) on polymérise le produit d'ammoniolyse en présence d'un catalyseur basique de formule (IV)
R⁶R⁷R⁸R⁹N⁺ A⁻ (IV)
dans laquelle
R⁶, R⁷, R⁸ et R⁹ représentent chacun indépendamment les uns des autres, un radical organique en C₁-C₂₄ et A⁻ représente un groupe alcoxy ou hydroxy provoquant la déprotonation ou un hydrure complexe de métal ou de non métal, ce qui donne un polymère organique de silazane.

2. Procédé selon la revendication 1, caractérisé en ce que R¹ et R² = méthyle, R³ = Cl, méthyle ou vinyle et R⁴ et R⁵ = Cl ou méthyle.

3. Procédé selon la revendication 1, caractérisé en ce que l'on fait réagir avec l'ammoniac un mélange de 0 à 70 mol % de méthyltrichlorosilane, 0 à 50 mol % de diméthyldichlorosilane, de méthylvinyldichlorosilane, de 1,2-bis-(diméthyldichlorosilyl)éthane ou de 1,2-bis-(méthyldichlorosilyl)éthane et leurs mélanges, et 5 à 100 mol % de méthyldichlorosilane.

4. Procédé selon la revendication 1, caractérisé en ce que l'on fait réagir le méthyldichlorosilane avec l'ammoniac.

5. Procédé selon une ou plusieurs des revendications 1 à 4, caractérisé en ce que le catalyseur est un hydroxyde de tétraalkylammonium et/ou un alcoolate de tétraalkylammonium.

6. Procédé selon la revendication 5, caractérisé en ce que le catalyseur consiste en hydroxyde de tétraméthylammonium, éthylate de tétraméthylammonium, hydroxyde de tétraéthylammonium, méthylate de tétraéthylammonium, hydroxyde de tétrabutylammonium, méthylate de tétrabutylammonium, hydroxyde de benzyltriméthylammonium, méthylate de benzyltriméthylammonium, un hydroxyde de (alkyle en C₄-C₂₄)triméthylammonium et/ou un méthylate de (alkyle en C₄-C₂₄)triméthylammonium.

7. Polymère organique de silazane obtenu
a) en faisant réagir au moins un organochlorosilane de formule (I) 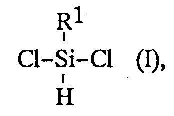 dans laquelle
R¹ = Cl, H, alkyle en C₁-C₄ ou phényle,
seul ou avec un ou plusieurs organochlorosilane de formule (II) ou (III) 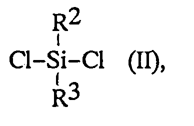 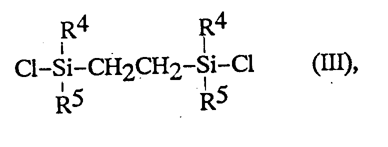
dans lesquelles
R², R³, R⁴ et R⁵ représentent chacun, indépendamment les uns des autres, Cl, un groupe alkyle en C₁-C₄, vinyle ou phényle,
avec l'ammoniac dans un solvant inerte à des températures allant de -80 à +120°C, ce qui donne un produit d'ammoniolyse et
b) en polymérisant le produit d'ammoniolyse, en présence d'un catalyseur basique de formule (IV)
R⁶R⁷R⁸R⁹N⁺ A⁻ (IV)
dans laquelle
R⁶, R⁷, R⁸ et R⁹ représentent chacun indépendamment les uns des autres, un radical organique en C₁-C₂₄ et A⁻ représente un groupe alcoxy ou hydroxy provoquant la déprotonation ou un hydrure complexe de métal ou de non métal, ce qui donne un polymère organique de silazane.

8. Polymère organique de silazane selon la revendication 7, caractérisé en ce qu'il est exempt de métaux alcalins et alcalino-terreux.

9. Procédé de préparation de matières céramiques, caractérisé en ce que
a) on fait réagir au moins un organochlorosilane de formule (I) 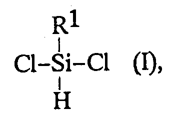 dans laquelle
R¹ = Cl, H, alkyle en C₁-C₄ ou phényle,
seul ou avec un ou plusieurs organochlorosilane de formule (II) ou (III) 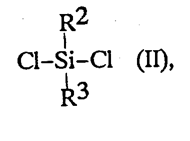 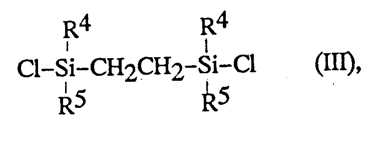
dans lesquelles
R², R³, R⁴ et R⁵ représentent chacun, indépendamment les uns des autres, Cl, un groupe alkyle en C₁-C₄, vinyle ou phényle,
avec l'ammoniac dans un solvant inerte à des températures allant de -80 à +120°C, ce qui donne un produit d'ammoniolyse et
b) on polymérise le produit d'ammoniolyse en présence d'un catalyseur basique de formule (IV)
R⁶R⁷R⁸R⁹N⁺ A⁻ (IV)
dans laquelle
R⁶, R⁷, R⁸ et R⁹ représentent chacun indépendamment les uns des autres, un radical organique en C₁-C₂₄, A⁻ représente un groupe alcoxy ou hydroxy provoquant la déprotonation ou un hydrure complexe de métal ou de non métal, ce qui donne un polymère organique de silazane; et
c) on fritte le polymère de silazane, ce qui donne une matière céramique.

10. Procédé selon la revendication 9, caractérisé en ce que l'on fond et on façonne le polymère de silazane puis on le fritte pour formation d'une matière céramique.

11. Procédé selon la revendication 10, caractérisé en ce que l'on applique le polymère de silazane sur une surface de support, en revêtement, et on fritte pour formation d'un revêtement de matière céramique.

12. Procédé selon la revendication 10, caractérisé en ce que l'on mélange le polymère de silazane avec une poudre de matière céramique ou une poudre de métal ou des fibres de matières céramiques, on moule le mélange sous l'action de la chaleur et/ou de la pression et on fritte pour formation d'une matière céramique.

13. Procédé selon une ou plusieurs des revendications 10 à 12, caractérisé en ce que, après formage, le polymère de silazane est rendu infusible par chauffage, oxydation, hydrolyse ou exposition à des rayonnements puis fritté pour formation d'une matière céramique.

14. Procédé selon l'une ou plusieurs des revendications 10 à 13, caractérisé en ce que le frittage est réalisé à des températures de 800 à 2 200°C.

15. Procédé selon la revendication 14, caractérisé en ce que le frittage est réalisé sous vide ou en atmosphère de gaz inerte.

16. Procédé selon la revendication 14, caractérisé en ce que le frittage est réalisé, en partie au moins, en atmosphère de H₂ ou de NH₃, pour formation d'une matière céramique pratiquement exempte de carbone.
